# EUROPÄISCHE PATENTSCHRIFT

(11) **EP 2 552 642 B1**
(45) Veröffentlichungstag und Bekanntmachung des Hinweises auf die Patenterteilung: **10.07.2019**
(21) Anmeldenummer: 11710164.2
(22) Anmeldetag: 16.03.2011
(51) Int. Cl.: B23Q 3/12, B23Q 3/18

(54) **ZENTRIEREINRICHTUNG ZUM ZENTRIEREN EINES SPANNFUTTERS AN EINER DREHSPINDEL UND ZUGEHÖRIGE VERRIEGELUNGSEINRICHTUNG**
CENTRING DEVICE FOR CENTRING A CHUCK ON A ROTATING SPINDLE AND ASSOCIATED LOCKING DEVICE
DISPOSITIF DE CENTRAGE POUR CENTRER UN MANDRIN DE SERRAGE SUR UNE BROCHE ROTATIVE ET DISPOSITIF DE VERROUILLAGE CORRESPONDANT

(30) Priorität: 20.09.2010 DE 102010041054; 01.04.2010 DE 202010014139 U
(43) Veröffentlichungstag der Anmeldung: 06.02.2013
(73) Patentinhaber: Schunk GmbH & Co. KG Spann- und Greiftechnik, 74348 Lauffen am Neckar (DE)
(72) Erfinder: SCHRÄDER, Philipp, 88512 Mengen (DE); HOLSTEIN, Alexander, 88499 Heiligkreuztal (DE)
(74) Vertreter: DREISS Patentanwälte PartG mbB
(86) Internationale Anmeldenummer: PCT/EP2011/054000
(87) Internationale Veröffentlichungsnummer: WO 2011/120811

(56) Entgegenhaltungen:
- EP-A1- 1 275 468
- EP-A1- 1 295 675
- WO-A1-94/23871
- DE-A1- 4 302 655
- DE-A1- 10 032 073
- DE-C- 724 892
- US-A- 4 688 810
- US-A- 4 833 955
- US-A- 5 964 556
- US-A1- 2005 013 675

## Beschreibung

Die Erfindung betrifft eine Verriegelungseinrichtung zur Verriegelung eines Spannfutters an einer Drehspindel einer Maschine, mit einem Befestigungsabschnitt, der eine Zentriereinrichtung zum Zentrieren des Spannfutters am Befestigungsabschnitt aufweist.

In Spannfuttern werden zu bearbeitende Werkstücke gespannt. Je nach Art des zu bearbeitenden Werkstückes kann es erforderlich sein, an einer Maschine verschiedene Spannfutter vorzusehen beziehungsweise diese auszuwechseln. Mit der Erfindung soll eine Zentriereinrichtung zum Zentrieren des Spannfutters an einem Befestigungsabschnitt insbesondere einer Drehspindel vorgeschlagen werden, welche zum einen eine sichere Zentrierung und zum anderen eine definierte Anlage des Spannfutters an der Drehspindel ermöglicht.

Als Zentriereinrichtungen sind beispielsweise Konusse und zugehörige Gegenkonusse bekannt. Das Vorsehen von Konussen und Gegenkonussen hat allerdings den Nachteil, dass dann, wenn die Konusflächen des Konus und des Gegenkonus aneinander anliegen, eine Plananlage des Spannfutters an einem insbesondere spindelseitigen Anschlag nur dann, wenn überhaupt, ermöglicht wird, wenn eine exakte Ausrichtung der Konusabschnitte beziehungsweise des Spannfutters und der zugehörige Anschlag erreicht wird. Da dies in der Praxis nur schwer möglich ist, sind die bekannten Systeme in der Regel geometrisch überbestimmt.

Aus der EP 1 275 468 A1 und der EP 1 295 675 A1 sind Werkzeughaltesysteme bekannt, mit den Werkzeuge zentirisch gespannt werden. Eine Verriegelungseinrichtung nach dem Oberbegriff des Anspruchs 1 ist aus der US 4 833 955 A vorbekannt.

Der vorliegenden Erfindung liegt die Aufgabe zugrunde, eine Verriegelungseinrichtung der eingangs genannten Art bereitzustellen, wobei eine geometrische Überbestimmtheit ausgeschlossen und ein funktionssicheres und wiederholgenaues Anordnen des Spannfutters an beispielsweise einer Drehspindel ermöglicht wird.

Diese Aufgabe wird gelöst durch eine Verriegelungseinrichtung mit den Merkmalen des Anspruchs 1.

Die erfindungsgemäße Zentriereinrichtung zeichnet sich insbesondere dadurch aus, dass am Befestigungsabschnitt ein mit einem spannfutterseitigen Gegenkonusabschnitt korrespondierender Konusabschnitt derart vorgesehen ist, dass der Konusabschnitt und/oder der Gegenkonusabschnitt so in axialer Richtung elastisch nachgiebig ausgebildet ist, dass nach Anlage des Konusabschnitts am Gegenkonusabschnitt das Spannfutter aufgrund einer axialen Kraft wenigstens bedingt weiter in axialer Richtung verlagerbar ist, bis das Spannfutter an einen insbesondere befestigungsabschnittsseitigen Anschlag zum Anliegen kommt. Entscheidend ist, dass beim Aufeinander-zu-Bewegen des Spannfutters und des Befestigungsabschnitt vor dem Anliegen des Spannfutters am Befestigungsabschnitt der Konusabschnitt in Berührkontakt mit dem Gegenkonusabschnitt kommt. Aufgrund der Nachgiebigkeit des Konusabschnitts oder Gegenkonusabschnitts kann dieser beim Verriegeln des Spannfutters in axialer Richtung nachgeben, wodurch ein definiertes und vollständiges Anliegen des Drehfutters am Anschlag des Befestigungsabschnitts bzw. der Drehspindel erreicht werden kann, ohne dass es zu einer geometrischen Überbestimmung kommt. Insbesondere kann das Spannfutter großflächig am entsprechenden Anschlag zum Anliegen kommen.

Ferner wird gewährleistet, dass beim Verriegeln des Spannfutters an beispielsweise der Drehspindel eine geeignete Einzugskraft bereit gestellt wird, die das Spannfutter in axialer Richtung gegen ein Bauteil bzw. die Drehspindel beaufschlagt. Während der Zentrierung wird folglich der Konusabschnitt oder der Gegenkonusabschnitt in axialer Richtung elastisch verformt, so dass das Spannfutter am befestigungsabschnittsseitigen Anschlag zum Anliegen kommen kann.

Als Verriegelungsmittel sind dabei Spannschieber vorgesehen, die über ein Drehglied miteinander derart bewegungsgekoppelt sind, dass beim Verdrehen des Drehglieds die Spannschieber ihre radiale Lage ändern und in einer radial äußeren oder radial inneren Verriegelungslage zur Verriegelung des Spannfutters am Befestigungsabschnitt verlagerbar sind. Dies hat den Vorteil, dass lediglich über Betätigen eines Gliedes, nämlich des Drehgliedes, die mehreren Spannschieber entsprechend bewegt werden können.

Die Erfindung soll dabei aber nicht auf sich drehende Spannfutter beschränkt sein, sondern auch stationäre Systeme erfassen.

Der Befestigungsabschnitt kann dabei unmittelbar von einem Bauteil oder einer Baugruppe wie insbesondere einer Drehspindel gebildet sein oder von einen an dem Bauteil oder der Drehspindel anordenbaren Befestigungseinrichtung.

Vorteilhafterweise wird der Konusabschnitt oder der Gegenkonusabschnitt von parallel zueinander verlaufenden ringartig ausgebildeten Wandungsabschnitten gebildet. Die Wandungsabschnitte liegen dabei vorzugsweise in im Wesentlichen quer zur Fügerichtung verlaufenden Ebenen. Die Wandungsabschnitte können dabei einstückig mit dem jeweils zugehörigen Bauteil verbunden sein. Insbesondere können sie durch Einstiche realisiert sein.

Vorteilhafterweise ist das Verhältnis des Abstands der Wandungsabschnitte zu deren Radialerstreckung kleiner Eins und vorzugsweise im Bereich von 1:2 bis 1:8 und vorzugsweise im Bereich von 1:3 bis 1:5. Aufgrund dieses Verhältnisses kann eine bedingte elastische Nachgiebigkeit des Konusabschnitts und/oder des Gegenkonusabschnitts erreicht werden. Insbesondere dann, wenn die Abschnitte aus einem metallischen Material sind. Es hat sich gezeigt, dass eine elastische Nachgiebigkeit im Bereich von 1/100 mm bis 1/10 mm ausreichend ist, um die Überbestimmtheit auszuschalten.

Ferner kann vorteilhaft sein, wenn die Ober- und Unterseiten jeweils eines Wandungsabschnitts im Querschnitt keilförmig hin zur Mittellängsachse verlaufend ausgebildet sind. Die Keilförmigkeit hat den Vorteil, dass im radial innen liegenden Bereich der Wandungsabschnitte die Wandungsabschnitte eine geringere Materialstärke aufweisen und hierdurch die elastische Nachgiebigkeit zunimmt.

Dabei ist vorteilhaft, wenn jeweils ein Wandungsabschnitt einen Keilwinkel im Bereich von 5° bis 20° und vorzugsweise im Bereich von 8° bis 12° und weiter vorzugsweise im Bereich von 10° einschließen. Es hat sich gezeigt, dass diese Winkelbereiche zu günstigen elastischen Eigenschaften führen.

Zusätzlich oder alternativ ist denkbar, dass die Ober- oder Unterseite jeweils eines Wandungsabschnitts senkrecht zur Mittellängsachse verlaufend angeordnet ist. Auch hieraus ergeben sich geometrisch günstige Verhältnisse, die zu einer guten elastischen Verformbarkeit der Wandungsabschnitte führt.

Nach einer weiteren Ausbildung der Erfindung ist denkbar, dass der Konusabschnitt oder der Gegenkonusabschnitt von parallel aufeinander liegenden Lamellen gebildet wird, deren radial außen liegenden, freien Stirnseiten zur Anlage an den Gegenkonusabschnitt beziehungsweise Konusabschnitt vorgesehen sind. Aufgrund der aufeinander liegenden Lamellen werden diese in der Verriegelungslage weitestgehend parallel elastisch nachgiebig verformt. Aufgrund der vergleichsweise geringen Dicke der Lamellen ist eine elastische Nachgiebigkeit in axialer Richtung gewährleistet, wobei in radialer Richtung eine sehr hohe Steifigkeit gegeben ist. Insofern kann hierdurch in vorteilhafter Weise eine hohe radiale Steifigkeit bei dennoch günstiger axialer Nachgiebigkeit erreicht werden.

Bei Anordnung der Lamellen ist zum Erhalt der konusartigen Mantelfläche erforderlich, dass der Außendurchmesser der unteren oder oberen Lamelle kleiner ist als der der oberen oder unteren Lamelle. Die zwischen der obersten und untersten Lamelle liegenden Lamellen weisen dann Außendurchmesser auf, die geringfügig ansteigend oder absteigend sind, so dass sich insgesamt eine konusförmige Mantelfläche ergibt. Denkbar ist, dass die außenliegenden, freien Stirnseiten der Lamellen nachbearbeitet werden, um eine exakt konusförmige Mantelfläche zu erhalten.

Vorzugsweise haben die einzelnen Lamellen eine Dicke im Bereich von 0,1 mm bis 1,5 mm und insbesondere im Bereich von 0,3 mm bis 0,7 mm und weiter insbesondere etwa 0,5 mm.

Ferner liegt die Anzahl der vorgesehenen Lamellen insbesondere im Bereich von 5 bis 20, vorzugsweise im Bereich von 8 bis 15 und weiter vorzugsweise im Bereich von 10 bis 12.

Die Lamellen sind als solche vorzugsweise jeweils ringartig ausgebildet und weisen ein zentrales Loch auf, in welches ein Bolzen zur Halterung der Lamellen eingreift. Die einzelnen Lamellen haben dann jeweils unterschiedliche Durchmesser, wobei die Durchmesser hin in Richtung des Konus jeweils ab- oder zunehmen.

Ferner ist vorteilhaft, wenn der Befestigungsabschnitt einen Futteraufnahmeabschnitt und das Drehfutter einen Spannabschnitt zum Einführen in den Futteraufnahmeabschnitt aufweist, wobei die Verriegelungsmittel und/oder der Spannabschnitt Einzugsschrägen derart aufweist, dass das Spannfutter beim Verlagern der Verriegelungsmittel in die Verriegelungslage gegen den Befestigungsabschnitt beaufschlagt wird. Aufgrund der Verlagerung der Verriegelungsmittel wird folglich die Einzugskraft bereitgestellt. Der Spannabschnitt kann dabei insbesondere als Spannring ausgebildet sein und der Futteraufnahmeabschnitt als Futteraufnahmering.

Zur Verdrehung des Drehglieds kann ein mit dem Drehglied bewegungsgekoppelter, tangential zum Drehglied verlagerbares, über eine Verstellschraube betätigbares Steuermittel vorgesehen sein. Die Anordnung des Steuermittels und der Verstellschraube ist dabei derart, dass bei Verdrehen der Stellschraube das Steuermittel tangential zum Drehglied bewegt wird. Aufgrund der Bewegungskopplung des Steuermittels mit dem Drehglied wird dann das Drehglied um seine Mittellängsachse verdreht. Hierdurch können folglich die Spannabschnitte bewegungssynchron zueinander verlagert werden, wobei lediglich ein Bauteil, nämlich die Verstellschraube, zu betätigen ist.

Zur Bewegungskopplung des Drehglieds mit den Spannschiebern ist denkbar, dass das Drehglied Steuerkurven beziehungsweise Steuernocken umfasst und dass die Spannschieber mit den Steuerkurven beziehungsweise Steuernocken korrespondierende Steuernocken beziehungsweise Steuerkurven aufweisen. Die Steuerkurven können dabei insbesondere schräg zu einer radial verlaufenden Linie angeordnet sein. Zur Kraftverstärkung können diese auch gekrümmt verlaufend angeordnet sein.

Weitere Einzelheiten und vorteilhafte Ausgestaltungen sind der nachfolgenden Beschreibung zu entnehmen, anhand derer verschiedene Ausführungsbeispiele der Erfindung näher beschrieben und erläutert sind. Es zeigen:
Figur 1 einen Längsschnitt durch eine Verriegelungseinrichtung mit einem Befestigungsabschnitt;
Figur 2 die Vorderansicht des Befestigungsabschnitts gemäß Figur 1 auf das Spannfutter;
Figur 3 der in der Figur 1 gezeigte Befestigungsabschnitt als Baugruppe;
Figur 4a b, c) verschiedene Ansichten des Befestigungsabschnitts gem. Figur 3 in der Verriegelungslage;
Figur 5a, b, c) verschiedene Ansichten des Befestigungsabschnitts [0030] gemäß Figur 3 in der Freigabelage;
Figur 6 einen Schnitt durch den Befestigungsabschnitt gemäß Figur 3 mit Zugrohr und Zugadapter;
Figur 7 einen der Figur 6 entsprechenden Schnitt in der Freigabelage;
Figur 8a, b, c verschiedene Ansichten des Grundkörpers des Befestigungsabschnitts;
Figur 9a und b verschiedene Ansichten des Drehglieds des Befestigungsabschnitts;
Figur 10 verschiedene Ansichten eines Spannschiebers des Befestigungsabschnitts;
Figur 11a und b verschiedene Ansichten eines Zugadapters des Befestigungsabschnitts; und
Figur 12 verschiedene Ansichten des Spannrings der Drehspindel;
Figur 13a einen der Figur 6 entsprechenden Schnitt ohne Zugrohr und Zugadapter, aber mit Spannfutterkörperaufnahme;
Figur 13b einen vergrößerten Ausschnitt aus Figur 13a;
Figur 14a einen Schnitt entsprechend der Figur 13a durch eine andere Ausführungsform;
Figur 14b einen vergrößerten Ausschnitt aus Figur 14a;
Figur 15a einen der Figur 13a entsprechenden Schnitt einer weiteren Ausführungsform;
Figur 15b einen vergrößerten Ausschnitt aus Figur 15a;
Figur 16a einen der Figur 13a entsprechenden Schnitt einer weiteren Ausführungsform;
Figur 16b einen vergrößerten Ausschnitt aus Figur 16a.

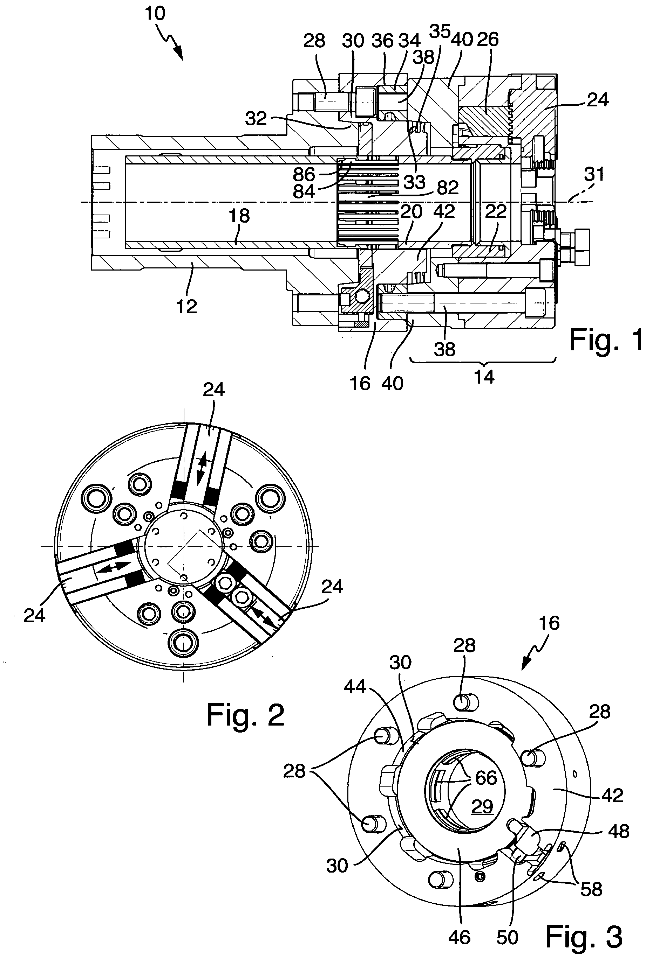

In der Figur 1 ist eine Verriegelungseinrichtung 10, die auch als Befestigungssystem bezeichnet werden kann, gezeigt, welches eine maschinenseitige Drehspindel 12, ein Spannfutter 14 sowie einen Befestigungsabschnitt in Form einer Befestigungseinrichtung 16, mittels welcher das Spannfutter 14 an der Drehspindel 12 befestigt ist, umfasst. Ferner ist ein maschinenseitiges Zugrohr 18 vorgesehen, welches über einen futterseitigen Zugadapter 20 einen Spannkolben 22 in axialer Richtung betätigt. Der Spannkolben 22 ist dabei mit insgesamt aufeinander zu- und voneinander wegbewegbaren, in der Ansicht gemäß Figur 2 deutlich zu erkennenden Futterbacken 24 bewegungsgekoppelt. Die Bewegungskopplung ist derart, dass ein axiales Verschieben des Spannkolbens 22 über mechanische Stellglieder 26 ein radiales Bewegen der Futterbacken 24 aufeinander zu bzw. voneinander weg bewirkt. Über eine axiale Bewegung des Zugrohrs 18 kann folglich das Spannfutter 14 bzw. dessen Futterbacken 24, kraftbetätigt werden.

Die Befestigungseinrichtung 16 weist im mittleren Bereich einen zentralen Durchbruch 29 auf. Die Mittellängsachse ist mit dem Bezugszeichen 31 gekennzeichnet.

Wie aus Figur 1 deutlich wird, ist die Befestigungseinrichtung 16 über Befestigungsschrauben 28 an die Drehspindel 12 angeflanscht. Zur Zentrierung der Befestigungseinrichtung 16 weist diese einen Innenkonus 30 auf, der mit einem spindelseitigen Außenkonus 32 zusammenwirkt. Zur Zentrierung des Spannfutters 14 an der Befestigungseinrichtung 16 weist die Befestigungseinrichtung 16 einen Konusabschnitt 33 auf, der mit einem futterseitigen Gegenkonusabschnitt 35 zusammenwirkt. Der Konusabschnitt 33 und der Gegenkonusabschnitt 35 bilden dabei eine Zentriereinrichtung 100.

Das Spannfutter 14 weist auf seiner der Befestigungseinrichtung 16 zugewandten Seite einen Spannring 34 auf, der in einen ringartig ausgebildeten Futteraufnahmeabschnitt 36 eingreift. Wie ebenfalls aus Figur 1 deutlich wird, ist der Spannring 34 mittels Befestigungsschrauben 38 an einer Spannfutteraufnahme 40 angeschraubt.

In der Figur 3 ist die Befestigungseinrichtung 16 als separate Baugruppe dargestellt. Dabei ist zu erkennen, dass die Befestigungseinrichtung 16 einen Grundkörper 42 aufweist, welcher die Befestigungsschrauben 28 aufnimmt. Ferner wird der Innenkonus 30 ebenfalls vom Grundkörper gebildet.

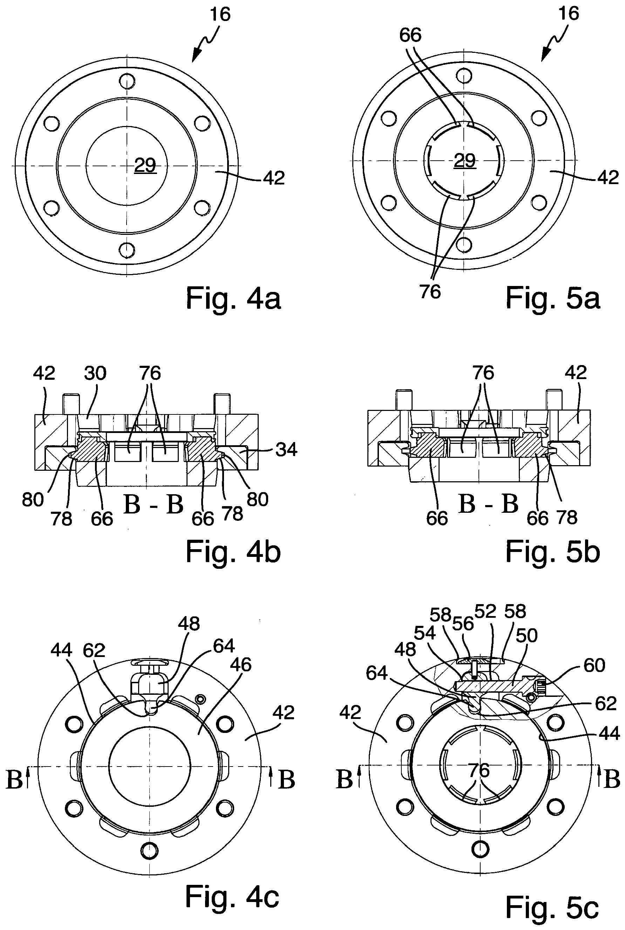

Wie insbesondere aus den Figuren 3, 4 und 5 deutlich wird, weist der Grundkörper 42 auf seiner der Drehspindel 12 zugewandten Seite eine Ringaufnahme 44 auf, in welcher ein Drehglied 46 in Form eines Drehrings drehbar gelagert angeordnet ist. Zur Verdrehung des Drehglieds 46 ist ein mit dem Drehglied 46 bewegungsgekoppeltes Steuermittel in Form eines Steuerkolbens 48 vorgesehen. Wie insbesondere aus Figur 5c deutlich wird, ist der Steuerkolben 48 in tangentialer Richtung entlang einer Verstellschraube 50 verlagerbar. Die Verstellschraube 50 weist ein Spindelgewinde 52 auf, das mit einem Innengewinde 54 des Steuerkolbens 48 derart zusammenwirkt, dass beim Verdrehen der Stellschraube 50 der Steuerkolben 48 in Längsrichtung der Verstellschraube 50 bewegt wird. Zur Positionsanzeige des Steuerkolbens 48 ist am Steuerkolben 48 ein Sichtschieber 56 vorgesehen, dessen Lage durch am Grundkörper 42 vorgesehene Sichtfenster 58 optisch erkennbar ist.

Die Verstellschraube 50 weist an ihrem frei zugänglichen Ende einen Betätigungsabschnitt 60 auf, in den ein insbesondere manuell verdrehbarer Schraubenschlüssel zum Verdrehen der Verstellschraube 50 einführbar ist. Zur Bewegungskopplung des Steuerkolbens 48 mit dem Drehglied 46 weist das Drehglied 46 eine Nockenaussparung 62 auf, in welche der steuerkolbenseitige Nocken 64 eingreift.

Das Drehglied 46 ist mit Verriegelungsmitteln in Form von Spannschiebern 66 derart bewegungsgekoppelt, dass beim Verdrehen des Drehglieds 46 die Spannschieber 66 ihre radiale Lage ändern und von einer radial äußeren Verriegelungslage in eine radial innere Freigabelage überführbar sind. In der Figur 4a, 4b und 4c ist die radial äußere Verriegelungslage der Spannschieber 66 gezeigt. In der Figur 5a, 5b und 5c ist die radial innere Freigabelage der Spannschieber 66 gezeigt.

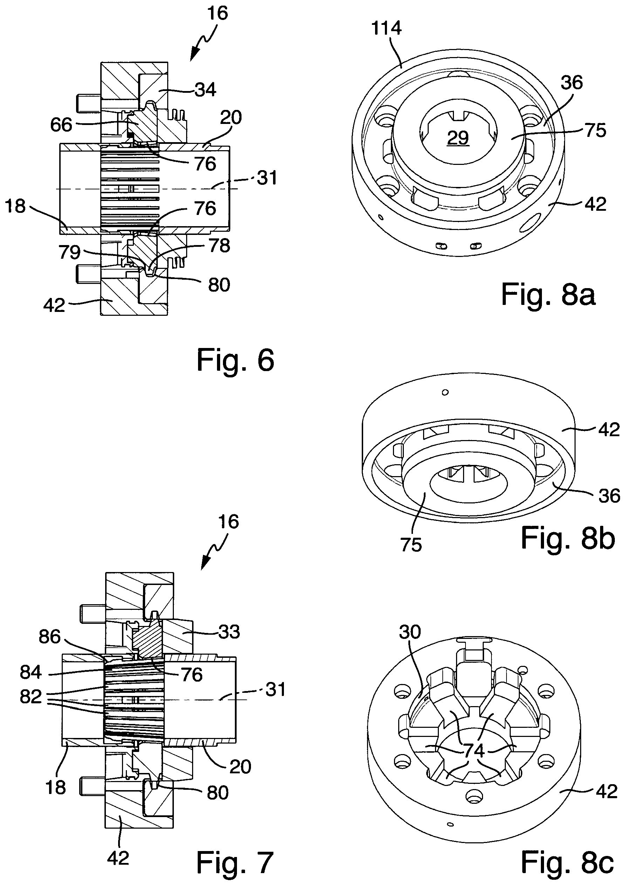

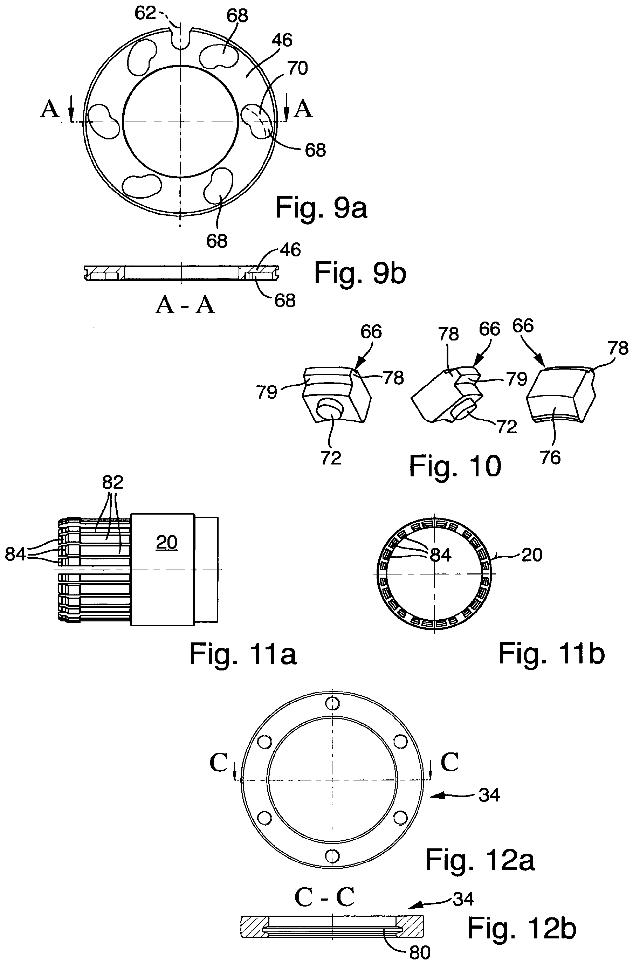

Zur Bewegungskopplung des Drehglieds 46 mit den Spannschiebern 66 weist das Drehglied 46 auf seiner den Spannschiebern 66 zugewandten Oberseite Ausnehmungen in Form von Steuerkurven 68 auf. In der Figur 9a und 9b, die das Drehglied 46 als Einzelteil zeigen, sind diese Steuerkurven 68 deutlich zu erkennen. Die Steuerkurven 68 weisen dabei eine jeweils leicht gekrümmte Achse 70 auf, die derart ist, das seine Kraftverstärkung hin in die radial äußere Verriegelungslage erfolgt. Die Spannschieber 66, die in Figur 10 als Einzelteil dargestellt sind, weisen auf der dem Drehglied 46 zugewandten Seite jeweils einen Steuernocken 72 auf, der mit jeweils einer Steuerkurve 68 zusammenwirkt. Die Spannschieber 66 sind als solche im Grundkörper 42 in radialer Richtung verlagerbar gelagert. Dies wird insbesondere aus Figur 8c deutlich, wo Führungsnuten 74 für die jeweiligen Spannschieber 66 deutlich zu erkennen sind.

Wie aus Figur 8 deutlich wird, weist der Grundkörper 42 eine innenliegende, umlaufende Ringwand 75 auf, die auf der radial innenliegenden Seite den zentralen Durchbruch 29 begrenzt und auf der radial außen liegenden Seite den ringartigen Futteraufnahmeabschnitt 36. Die Führungsnuten 74 erstrecken sich durch die Ringwand 75 hindurch, so dass die Spannschieber 66 je nach Lage zum einen in den Bereich des zentralen Durchbruchs 29 eingreifen (Freigabelage) und zum anderen in den Futteraufnahmeabschnitt 36 eingreifen (Verriegelungslage).

Die Spannschieber 66 weisen einen radial innenliegenden Abschnitt 76 und einen radial außen liegenden Abschnitt 78 auf. Wie aus Figur 4b deutlich wird, weist der im Querschnitt v-förmig ausgebildete, radial äußere Abschnitt 78 Einzugsschrägen 79 auf und greift in der Verriegelungslage in eine am Spannring 34 vorgesehene umlaufende Ringnut 80 ein, die ebenfalls einen v-förmigen Querschnitt aufweist. Die Ringnut 80 ist insbesondere in Figur 12a und 12b deutlich zu erkennen, in welcher der Spannring 34 als Einzelteil dargestellt ist. Aufgrund der Einzugsschrägen 79 wird das Spannfutter 14 beim Verlagern der Spannschieber 66 in die radial äußere Verriegelungslage gegen die Befestigungseinrichtung 16 beaufschlagt. Hierdurch wird eine sichere Verriegelung des Spannrings 36 in der Verriegelungslage an der Befestigungseinrichtung 16 erreicht.

Wie aus Figur 5b deutlich wird, in welcher sich die Spannschieber 66 in der radial innenliegenden Freigabelage befinden, rücken die Abschnitte 78 aus der Ringnut 80 aus, so dass das Spannfutter 14 samt Spannring 34 von der Befestigungseinrichtung 16 entnommen werden kann.

Im eingebauten Zustand der Befestigungseinrichtung 16 umgibt der Grundkörper 42, wie aus Figur 1 deutlich wird, den Zugadapter 20. In der Figur 1 ist eine Schnittebene gewählt, in der die Spannschieber nicht liegen und deshalb auch nicht dargestellt sind.

In Figur 6 und 7 ist die Befestigungseinrichtung 16 als Einzelteil mit einem Abschnitt des Zugrohrs 18 und des Zugadapters 20 in einem Schnitt dargestellt, in dem die Spannschieber 66 zu erkennen sind. Figur 6 zeigt die Verriegelungslage; der spannfutterseitige Spannring 34 ist über die Spannschieber 66 an der Befestigungseinrichtung 16 verriegelt gehalten. Wie aus Figur 6, Figur 7 und auch Figur 11, welche den Zugadapter 20 als Einzelteil zeigt, deutlich wird, weist der Zugadapter 20 auf der dem Zugrohr 18 zugewandten Seite Koppelabschnitte 82 in Form von einstückig mit dem Zugadapter 20 ausgebildeten, in radialer Richtung elastisch nachgiebigen Zungenabschnitten auf. Die Zungenabschnitte erstrecken sich dabei in axialer Richtung und sind in radialer Richtung elastisch nachgiebig. Die Zungenabschnitte weisen im Bereich ihres freien Endes nach radial außen weisende Nasen 84 auf. Diese Nasen 84 greifen, wie in Figur 1 und Figur 6 deutlich zu erkennen ist, in einen zugrohrseitigen Gegenabschnitt 86 ein, der als umlaufende Nut ausgebildet ist. Die Zungenabschnitte sind dabei am Zugadapter 20 derart angeordnet, dass sie in der radial inneren Freigabelage der Spannschieber 66, wie aus Figur 7 deutlich wird, nach radial innen elastisch verformt werden. Die Verformung geht soweit, dass die Nasen 84 aus den Gegenabschnitten 86 ausrücken und der Zugadapter 20 samt Spannfutter 14 dann in axialer Richtung abgenommen werden kann. Die Spannschieber 66 haben folglich eine Doppelfunktion; zum einen rücken ihre Abschnitte 78 aus dem Spannring 34 aus, zum anderen betätigen sie die Zungenabschnitte 82, so dass deren Nasen 84 aus den Gegenabschnitten 86 ausrücken. Das Spannfutter 14 kann dann abgenommen werden.

Bei dem in den Figuren dargestellten Ausführungsbeispiel ist der die Zungenabschnitte 82 umfassende Koppelabschnitt am Zugadapter 20 angeordnet und der Gegenabschnitt am Zugrohr 18. Gemäß der Erfindung kann der Koppelabschnitt auch am Zugrohr 18 vorgesehen sein und der Gegenabschnitt am Zugadapter 20. Die Anordnung hat dann derart zu erfolgen, dass die Spannschieber 66 die zugrohrseitigen Koppelabschnitte betätigen, um ein Abnehmen des Spannfutters samt Zugadapter 20 zu ermöglichen.

Die beschriebene Befestigungseinrichtung 16 bzw. die gesamte Verriegelungseinrichtung 10 hat den Vorteil, dass durch Verstellen lediglich einer Schraube, nämlich der Verstellschraube 50, das Spannfutter 14 auswechselbar ist. Durch Verstellen der Verstellschraube 50 wird zum einen die Verriegelung zwischen den Spannschiebern 66 und dem Spannring 34 gelöst und zum anderen die Kopplung des Zugrohrs 18 mit dem Zugadapter 20.

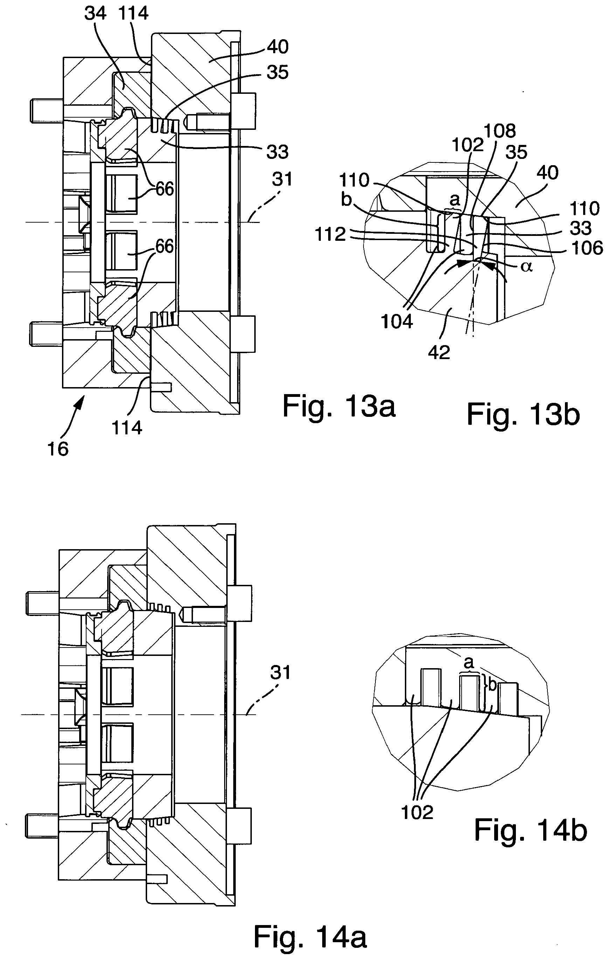

Der in der Figur 13a gezeigte Schnitt entspricht im Wesentlichen dem Schnitt gemäß Figur 6, wobei bei Figur 13a das Zugrohr und der Zugadapter nicht dargestellt sind. Anders als in Figur 6 ist in Figur 13a die spannfutterseitige Spannfutteraufnahme 40 dargestellt, an welchem der Spannring 34 befestigt ist.

Aus Figur 13a und 13b wird deutlich, dass die Verriegelungseinrichtung 10 eine Zentriereinrichtung 100 aufweist, die befestigungseinrichtungsseitig den Konusabschnitt 33 und spannfutterseitig den Gegenkonusabschnitt 35 umfasst.

Wie insbesondere aus Figur 6, Figur 13a und 13b deutlich wird, wird der Konusabschnitt 33 von im Wesentlichen parallel zueinander verlaufenden Wandungsabschnitten 102 gebildet. Insgesamt sind bei der in der Figur 13 gezeigten Ausführungsform zwei Wandungsabschnitte vorgesehen, die ringartig umlaufend sind. Die Wandungsabschnitte 102 sind dabei einstückig mit dem Grundkörper 42 ausgebildet. Die Wandungsabschnitte 102 können durch Einbringen von Einstichen 104 in den Grundkörper 42 realisiert sein. Wie aus insbesondere Figur 13b deutlich wird, weisen die Wandungsabschnitte 102 jeweils eine Oberseite 106 und eine Unterseite 108 auf. Die Oberseite kann dabei parallel zur Unterseite verlaufen. Aus Figur 13b wird allerdings deutlich, dass die Oberseite 106 und die Unterseite 108 im Querschnitt keilförmig hin zur Mittellängsachse verlaufend ausgebildet sind. Die Oberseite 106 und die Unterseite 108 schließen dabei einen Keilwinkel α im Bereich von 10° ein. Die Unterseite 108 verläuft dabei im Wesentlichen senkrecht zur Mittellängsachse 31. Die Oberseite 106 ist entsprechend geneigt. Gemäß der Erfindung ist auch denkbar, dass die Oberseite 106 senkrecht zur Mittellängsachse verläuft und die Unterseite 108 entsprechend geneigt ist. Denkbar ist ebenfalls, dass beide Seiten entsprechend geneigt zur Mittellängsachse 31 verlaufen. Die radial außen liegenden Mantelflächen 110 der Wandungsabschnitte 102 liegen dabei in einer konusförmigen, gekrümmten Ebenen. Im Fußbereich 112 gehen die Wandungsabschnitte 102 in den Grundkörper 42 über.

Das Spannfutter 14, beziehungsweise dessen Spannfutteraufnahme 40, weist den Gegenkonusabschnitt 35 auf, der zu dem Konusabschnitt 33 korrespondierend ausgebildet ist. Die Ausbildung ist dabei derart, dass beim axialen Aufeinander-zu-Bewegen des Spannfutters 14 auf die Befestigungseinrichtung 16 zunächst die Mantelflächen 110 der Wandungsabschnitte 102 am Gegenkonusabschnitt 35 zum Anliegen kommen. Nach dem Anliegen der Mantelflächen 110 am Gegenkonusabschnitt 35 kann dann das Spannfutter 14 weiter in axialer Richtung bewegt werden, bis das Spannfutter 14, beziehungsweise dessen Spannfutteraufnahme 40, an der Befestigungseinrichtung 16, beziehungsweise deren Grundkörper 42, zum Anliegen kommt. Dazu sieht die Befestigungseinrichtung 16, beziehungsweise deren Grundkörper 42, einen Anschlag 114 vor. Der Anschlag 114 wird von der dem Spannfutter 14 zugewandten ringartig umlaufenden Stirnfläche des Grundkörpers 42 gebildet. Insbesondere aus Figur 8a ist dieser Anschlag 114 deutlich zu erkennen.

Die Einzugskraft, mit der das Spannfutter 14 in axialer Richtung gegen die Befestigungseinrichtung 16 beaufschlagt wird, wird - wie eingangs erläutert - über das Verlagern der Spannschieber 66 in deren Verriegelungslage bereitgestellt.

Aufgrund der elastischen Nachgiebigkeit des Konusabschnitts 33, beziehungsweise dessen Wandungsabschnitte 102, in axialer Richtung, kann ein definiertes Anliegen des Spannfutters 14 am Anschlag 114 der Befestigungseinrichtung 116 gewährleistet werden. Zusätzlich kann eine funktionssichere Zentrierung erfolgen.

Bei der in Figur 14a und 14b gezeigten Ausführungsform weist nicht der Konusabschnitt 33, sondern der Gegenkonusabschnitt 35 parallel zueinander verlaufende Wandungsabschnitte 102 auf, die in axialer Richtung entsprechend nachgiebig sind. Der Konusabschnitt 33 weist im Gegensatz dazu eine geschlossene Oberfläche auf. Aufgrund der Wandungsabschnitte 102, die in Figur 14b deutlich zu erkennen sind, wird auch hier erreicht, dass nach Anlage des Konusabschnitts 33 am Gegenkonusabschnitt 35 das Spannfutter aufgrund der axialen Einzugskraft wenigstens bedingt weiter in axialer Richtung verlagerbar ist, bis das Spannfutter 14 an dem Anschlag 114 zum Anliegen kommt.

Wie insbesondere aus Figur 13b und Figur 14b deutlich wird, ist das Verhältnis der Abstände a der einzelnen Wandungsabschnitte 102 zueinander zu deren Radialerstreckung b im Bereich von 1:2 bis 1:5. Hieraus ergeben sich vorteilhafte elastische Eigenschaften der Wandungsabschnitte 102.

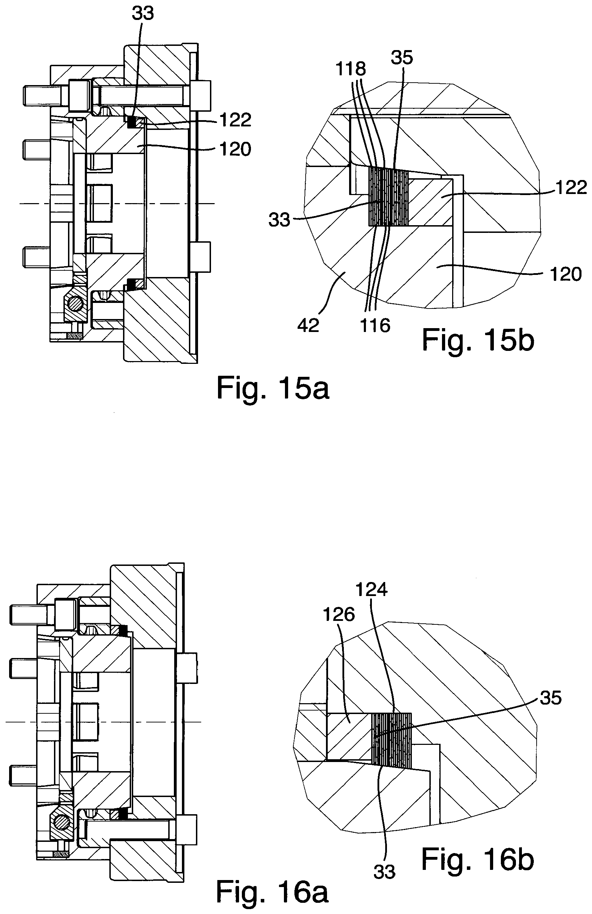

Bei der Ausführungsform gemäß Figur 15 wird der Konusabschnitt 33 von parallel aufeinander liegenden Lamellen 116 gebildet. Die radial außen liegenden, freien Stirnseiten 118 der Lamellen dienen dabei zur Anlage an den Gegenkonusabschnitt 35. Die einzelnen Lamellen 116 werden dabei von Ringscheiben gebildet, die auf einen Bolzenabschnitt 120 des Grundkörpers 42 aufgesetzt sind und über eine Sicherungsmutter 122 am Grundkörper 42 gehalten werden. Die einzelnen Lamellen 116 weisen dabei ein zentrales Loch auf, in welches der Bolzenabschnitt 120 eingreift. Der Außendurchmesser der einzelnen Lamellen 116 nimmt dabei zur Bildung einer insgesamt konischen Mantelfläche von axial innen nach axial außen hin leicht ab. Um eine exakt konusförmige Mantelfläche zu erhalten, ist denkbar, dass die Mantelfläche der auf den Grundkörper 42 angeordneten Lamellen 116 nachbearbeitet wird.

Bei der Figur 16 sind, anders als bei der Figur 15, die Lamellen 116 nicht am Konusabschnitt 33, sondern am Gegenkonusabschnitt 35 vorgesehen. Die Lamellen 116 sind hierbei ebenfalls als Ringscheiben ausgebildet, wobei hier die konusförmige Mantelfläche von den radial innenliegenden Stirnseiten der Lamellen 116 gebildet wird. Die Lamellen 116 werden hierzu in eine am Spannfutterkörper vorgesehene Aussparung 124 eingesetzt und dort mit einem Sicherungsring 126 gesichert.

Wie aus Figur 15 und 16 deutlich wird, weisen die Lamellen 116 eine Stärke von cirka 0,5 mm bis 1 mm auf. Insgesamt sind rund fünfzehn aufeinander liegende Lamellen 116 vorgesehen. Die Lamellen 116 bieten den Vorteil, dass sie bei Einwirkung von Kräften in radialer Richtung vergleichsweise formstabil sind. Bei Einwirkung von Kräften in axialer Richtung sind sie vergleichsweise biegeweich. Hierdurch kann erreicht werden, dass nach Anliegen des Gegenkonusabschnitts 35 beziehungsweise des Konusabschnitts 33 an den entsprechenden Stirnseiten der Lamellen 116 diese in axiale Richtung elastisch so weit verformt werden, bis das Spannfutter 14, beziehungsweise die Spannfutteraufnahme 40, am Anschlag 114 zum Anliegen kommt.

## Patentansprüche

1. Verriegelungseinrichtung (10) zur Verriegelung eines Spannfutters (14) an einer Drehspindel (12) einer Maschine,
mit einer Spannfutteraufnahme des Spannfutters und einem Befestigungsabschnitt (16), der eine Zentriereinrichtung (100) zum Zentrieren des Spannfutters (14) am Befestigungsabschnitt (16) aufweist,
wobei am Befestigungsabschnitt (16) Verriegelungsmittel (66) vorgesehen sind, die das Spannfutter (14) in einer Verriegelungslage mit einer in axialer Richtung wirkenden Einzugskraft gegen den Befestigungsabschnitt (16) beaufschlagen, wobei die Verriegelungsmittel (66) als Spannschieber ausgebildet sind, die über ein Drehglied (46) miteinander derart bewegungsgekoppelt sind, dass beim Verdrehen des Drehglieds (46) die Spannschieber ihre radiale Lage ändern und in eine radial äußeren oder radial inneren Verriegelungslage zur Verrieglung des Spannfutters (14) am Befestigungsabschnitt (16) verlagerbar sind, **dadurch gekennzeichnet, dass** am Befestigungsabschnitt (16) ein mit einem an der Spannfutteraufnahme angeordneten Gegenkonusabschnitt (35) korrespondierender Konusabschnitt (33) derart vorgesehen ist, dass der Konusabschnitt (33) oder der Gegenkonusabschnitt (35) so in axialer Richtung elastisch nachgiebig ausgebildet ist, dass nach Anlage des Konusabschnitts (33) am Gegenkonusabschnitt (35) das Spannfutter (14) aufgrund der Einzugskraft wenigstens bedingt weiter in axialer Richtung verlagerbar ist, bis das Spannfutter (14) an einem definierten Anschlag (114) zum Anliegen kommt.

2. Verriegelungseinrichtung (10) nach Anspruch 1, **dadurch gekennzeichnet, dass** der Konusabschnitt (33) und/oder der Gegenkonusabschnitt (35) von parallel zueinander verlaufenden ringartig ausgebildeten Wandungsabschnitten (102) gebildet ist.

3. Verriegelungseinrichtung (10) nach Anspruch 2, **dadurch gekennzeichnet, dass** das Verhältnis des Abstands (a) der Wandungsabschnitte (102) zu deren Radialerstreckung (b) kleiner eins ist und vorzugsweise im Bereich von 1:2 bis 1:8 und vorzugsweise im Bereich von 1:3 bis 1:5 liegt.

4. Verriegelungseinrichtung (10) nach Anspruch 2 oder 3, **Dadurch gekennzeichnet, dass** die Ober- und Unterseiten (106 und 108) jeweils eines Wandungsabschnitts (102) im Querschnitt keilförmig hin zur Mittellängsachse (31) verlaufend ausgebildet sind.

5. Verriegelungseinrichtung (10) nach Anspruch 5, **dadurch gekennzeichnet, dass** die Ober- und Unterseiten (106 und 108) jeweils eines Wandungsabschnitts (102) einen Keilwinkel (a) im Bereich von 5° bis 20° und vorzugsweise im Bereich von 8° bis 12° und weiter vorzugsweise im Bereich von 10° einschließen.

6. Verriegelungseinrichtung (10) nach einem der Ansprüche 2 bis 5, **dadurch gekennzeichnet, dass** die Ober- oder Unterseite (106 und 108) jeweils eines Wandungsabschnitts senkrecht zur Mittellängsachse verlaufend angeordnet ist.

7. Verriegelungseinrichtung (10) nach einem der vorherigen Ansprüche, **dadurch gekennzeichnet, dass** der Konusabschnitt (33) bzw. der Gegenkonusabschnitt (35) von parallel aufeinander liegenden Lamellen (116) gebildet wird, deren freien Stirnseiten (118) zur Anlage an den Gegenkonusabschnitt (35) bzw. Konusabschnitt (33) vorgesehen sind.

8. Verriegelungseinrichtung (10) nach Anspruch 7, **dadurch gekennzeichnet, dass** die einzelnen Lamellen (116) eine Stärke im Bereich von 0,1 bis 1 mm und vorzugsweise im Bereich von 0,3 bis 0,7 mm und weiter vorzugsweise etwa 0,5 mm betragen.

9. Verriegelungseinrichtung (10) nach Anspruch 7 oder 8, **dadurch gekennzeichnet, dass** die Anzahl der vorgesehenen Lamellen (116) im Bereich von 5 bis 20 und vorzugsweise im Bereich von 8 bis 15 und weiter vorzugsweise im Bereich von 10 bis 12 liegt.

10. Verriegelungseinrichtung (10) nach Anspruch 7, 8 oder 9, **dadurch gekennzeichnet, dass** die Lamellen (116) jeweils ringartig ausgebildet sind und ein zentrales Loch aufweisen.

11. Verriegelungseinrichtung (10) nach einem der vorherigen Ansprüche, **dadurch gekennzeichnet, dass** der Befestigungsabschnitt (16) einen Futteraufnahmeabschnitt (44) und das Drehfutter (14) einen Spannabschnitt zum Einführen in den Futteraufnahmeabschnitt (44) aufweist, wobei die Verriegelungsmittel (66) und/oder der Spannabschnitt (34) Einzugsschrägen derart aufweist, dass das Spannfutter (14) beim Verlagern der Verriegelungsmittel (66) in die Verriegelungslage gegen den Befestigungsabschnitt (16) beaufschlagt wird.

12. Verriegelungseinrichtung (10) nach einem der vorherigen Ansprüche, **dadurch gekennzeichnet, dass** zur Verdrehung des Drehglieds (46) ein mit dem Drehglied (46) bewegungsgekoppelter, tangential zum Drehglied (46) verlagerbares, über eine Verstellschraube (50) betätigbares Steuermittel (48) vorgesehen ist.

13. Verriegelungseinrichtung (10) nacheinem der vorherigen Ansprüche, **dadurch gekennzeichnet, dass** das Drehglied (46) Steuerkurven (68) bzw. Steuernocken umfasst und dass die Verriegelungsmittel (66) mit den Steuerkurven (68) bzw. Steuernocken korrespondierende Steuernocken (72) bzw. Steuerkurven aufweisen.

## Claims

1. Locking device (10) for locking a chuck (14) on a turning spindle (12) of a machine, with a chuck receptacle of the chuck and a fastening section (16) which has a centring device (100) for centring the chuck (14) on the fastening section (16), locking means (66) being provided on the fastening section (16), which locking means in a locking position apply a pulling-in force acting in the axial direction against the fastening section (16) to the chuck (14), the locking means (66) being in the form of a clamping slide, which are motion-coupled to one another via a rotary member (46) in such a way that, when the rotary member (46) is rotated, the clamping slides change their radial position and can be displaced into a radially outer or radially inner locking position for locking the chuck (14) on the fastening section (16), **characterized in that** a cone section (33) corresponding to a counter-cone section (35) arranged on the chuck receptacle is provided on the fastening section (16) in such a way that the cone section (33) or the counter-cone section (35) is elastically flexible in the axial direction, **in that**, after the cone section (33) has come to bear against the counter-cone section (35), the clamping chuck (14) can be displaced further in the axial direction at least conditionally due to the pulling-in force until the clamping chuck (14) comes to bear against a defined stop (114).

2. Locking device (10) according to claim 1, **characterized in that** the cone section (33) and/or the counter-cone section (35) is formed by ring-shaped wall sections (102) extending parallel to one another.

3. Locking device (10) according to claim 2, **characterized in that** the ratio of the distance (a) between the wall sections (102) and their radial extension (b) is smaller than one and preferably lies in the range from 1:2 to 1:8 and preferably in the range from 1:3 to 1:5.

4. Locking device (10) according to claim 2 or 3, **characterized in that** the upper and lower sides (106 and 108) of a wall section (102) in each case have a wedge-shaped cross-section extending towards the central longitudinal axis (31).

5. Locking device (10) according to claim 4, **characterized in that** the upper and lower sides (106 and 108) of each wall section (102) enclose a wedge angle (α) in the range from 5° to 20° and preferably in the range from 8° to 12° and further preferably in the range from 10°.

6. Locking device (10) according to one of claims 2 to 5, **characterized in that** the upper or lower side (106 and 108) of in each case one wall section is arranged running perpendicularly to the central longitudinal axis.

7. Locking device (10) according to one of the preceding claims, **characterized in that** the cone section (33) or the counter-cone section (35) is formed by lamellae (116) which lie parallel to one another and whose free end faces (118) are provided for abutment against the counter-cone section (35) or the cone section (33).

8. Locking device (10) according to claim 7, **characterized in that** the individual lamellae (116) have a thickness in the range from 0.1 to 1 mm and preferably in the range from 0.3 to 0.7 mm and further preferably about 0.5 mm.

9. Locking device (10) according to claim 7 or 8, **characterized in that** the number of lamellae (116) provided is in the range from 5 to 20 and preferably in the range from 8 to 15 and further preferably in the range from 10 to 12.

10. Locking device (10) according to claim 7, 8 or 9, **characterized in that** the lamellae (116) are each ring-shaped and have a central hole.

11. Locking device (10) according to one of the preceding claims, **characterized in that** the fastening section (16) has a chuck receiving section (44) and the lathe chuck (14) has a clamping section for insertion into the chuck receiving section (44), the locking means (66) and/or the clamping section (34) having draw-in slopes in such a way that the chuck (14) is acted upon against the fastening section (16) when the locking means (66) are moved into the locking position.

12. Locking device (10) according to one of the preceding claims, **characterized in that** a control means (48), which is coupled in motion to the rotary member (46), can be displaced tangentially to the rotary member (46) and can be actuated via an adjusting screw (50), is provided for the rotation of the rotary member (46).

13. Locking device (10) according to one of the previous claims, **characterized in that** the rotary member (46) comprises control curves or control cams (68) an and **in that** the locking means (66) have control cams (72) or control curves corresponding to the control curves (68) or control cams.

## Revendications

1. Dispositif de verrouillage (10) pour verrouiller un mandrin (14) sur une broche de rotation (12) d'une machine, comprenant un logement de mandrin du mandrin et une section de fixation (16) qui présente un dispositif de centrage (100) pour centrer le mandrin (14) sur la section de fixation (16), des moyens de verrouillage (66) étant prévus sur la section de fixation (16) qui appliquent une force de traction dans la direction axiale contre la section de fixation (16), dans une position de verrouillage sur le mandrin (14), laquelle moyenne de blocage exerce une traction dans le sens axial à contre la section de fixation (16), les moyens de verrouillage (66) se présentant sous la forme d'une glissière de serrage, qui sont couplés entre eux par l'intermédiaire d'un élément rotatif (46) de telle sorte que, lorsque l'élément rotatif (46) est tourné, les glissières de serrage changent leur position radiale et peuvent être déplacées dans une position de verrouillage radialement extérieure ou radialement intérieure pour bloquer la pince de serrage (14) sur la section de fixation (16), **caractérisé en ce qu'**une section conique (33) correspondant à une section contre-cône (35) disposée sur le logement de mandrin est prévue sur la section de fixation (16) de telle sorte que la section conique (33) ou la section contre-cône (35) est élastiquement flexible dans la direction axiale, **en ce que** le mandrin de serrage (14) peut être déplacé davantage dans la direction axiale, au moins sous certaines conditions, après que la partie conique (33) est venue en appui contre la partie contre-cône (35), du fait de la force de traction, jusqu'à ce que le mandrin de serrage (14) vient en appui contre une butée définie (114).

2. Dispositif de verrouillage (10) selon la revendication 1, **caractérisé en ce que** la section conique (33) et/ou la section contre-cône (35) est formée par des sections de paroi (102) de forme annulaire s'étendant parallèlement les unes aux autres.

3. Dispositif de verrouillage (10) selon la revendication 2, **caractérisé en ce que** le rapport de la distance (a) entre les sections de paroi (102) et leur extension radiale (b) est inférieur à un et se situe de préférence dans la plage de 1:2 à 1:8 et de 1:3 à 1:5.

4. Dispositif de verrouillage (10) selon la revendication 2 ou 3, **caractérisé en ce que** les côtés supérieur et inférieur (106 et 108) d'une section de paroi (102) présentent chacun une section en forme de coin s'étendant vers l'axe longitudinal central (31).

5. Dispositif de verrouillage (10) selon la revendication 4, **caractérisé en ce que** les côtés supérieur et inférieur (106 et 108) de chaque section de paroi (102) renferment un angle de coin (a) dans la plage de 5° à 20° et de préférence dans la plage de 8° à 12° et de 10° de préférence.

6. Dispositif de verrouillage (10) selon l'une des revendications 2 à 5, **caractérisé en ce que** le côté supérieur ou inférieur (106 et 108) d'une section de paroi est disposé perpendiculairement à l'axe longitudinal central.

7. Dispositif de verrouillage (10) selon l'une des revendications précédentes, **caractérisé en ce que** la section conique (33) ou la section contre-cône (35) est formée de lamelles (116) parallèles les unes aux autres, dont les faces frontales libres (118) sont prévues pour s'appuyer contre la section contre-cône (35) ou la section conique (33).

8. Dispositif de verrouillage (10) selon la revendication 7, **caractérisé en ce que** les lamelles individuelles (116) ont une épaisseur comprise entre 0,1 et 1 mm et de préférence entre 0,3 et 0,7 mm et de préférence environ 0,5 mm.

9. Dispositif de verrouillage (10) selon la revendication 7 ou 8, **caractérisé en ce que** le nombre de lamelles (116) prévues est compris entre 5 et 20 et de préférence entre 8 et 15 et de plus de préférence entre 10 et 12.

10. Dispositif de verrouillage (10) selon la revendication 7, 8 ou 9, **caractérisé en ce que** les lamelles (116) ont chacune une forme annulaire et un trou central.

11. Dispositif de verrouillage (10) selon l'une des revendications précédentes, **caractérisé en ce que** la section de fixation (16) présente une section de réception de mandrin (44) et le mandrin de tour (14) présente une section de serrage à insérer dans la section de réception de mandrin (44), le moyen de verrouillage (66) et/ou la section de serrage (34) présentant une pente d'introduction, telle que, lors du passage du moyen de verrouillage (66) en position de verrouillage, le mandrin (14) est soumis à l'appui contre la section de fixation (16).

12. Dispositif de verrouillage (10) selon l'une des revendications précédentes, **caractérisé en ce qu'**un moyen de commande (48) couplé en mouvement à l'élément rotatif (46) peut être déplacé tangentiellement à l'élément rotatif (46) et peut être actionné par une vis de réglage (50), est prévu pour faire tourner l'élément rotatif (46).

13. Dispositif de verrouillage (10) selon l'une des revendications précédentes, **caractérisé en ce que** l'élément rotatif (46) comprend des courbes de commande ou des cames de commande (68) et **en ce que** les moyens de verrouillage (66) comportent des cames de commande (72) ou des courbes de commande correspondant aux courbes de commande (68) ou aux cames de commande.
